## Europäisches Patentamt

## European Patent Office

## Office européen des brevets

(11) Numéro de publication: **0 011 902**
**B1**

(12) **FASCICULE DE BREVET EUROPEEN**

(45) Date de publication du fascicule du brevet: **30.05.84**

(51) Int. Cl.³: **G 01 T 1/164**

(21) Numéro de dépôt: **79200692.6**

(22) Date de dépôt: **27.11.79**

(54) **Perfectionnement aux caméras à scintillations de type Anger.**

(30) Priorité: **05.12.78 FR 7834169**

(43) Date de publication de la demande:
**11.06.80 Bulletin 80/12**

(45) Mention de la délivrance du brevet:
**30.05.84 Bulletin 84/22**

(84) Etats contractants désignés:
**DE FR GB IT NL SE**

(56) Documents cités:
**FR-A-2 323 158**
**US-A-3 102 955**
**US-A-3 683 180**
**US-A-4 109 150**

(73) Titulaire: **Laboratoires d'Electronique et de Physique Appliquée L.E.P.**
**3, Avenue Descartes**
**F-94450 Limeil-Brévannes (FR)**
㊼ **FR**

(73) Titulaire: **N.V. Philips' Gloeilampenfabrieken**
**Groenewoudseweg 1**
**NL-5621 BA Eindhoven (NL)**
㊼ **DE GB IT NL SE**

(72) Inventeur: **Pergrale, Jean**
**Société Civile S.P.I.D. 209, Rue de l'Université**
**F-75007 - Paris (FR)**
Inventeur: **Jatteau, Michel**
**Société Civile S.P.I.D. 209, Rue de l'Université**
**F-75007 - Paris (FR)**

(74) Mandataire: **Bonnefous, Jean et al**
**Société Civile S.P.I.D. 209, Rue de l'Université**
**F-75007 - Paris (FR)**

Courier Press, Leamington Spa, England.

## Description

L'invention concerne un perfectionnement aux caméras à scintillations de type Anger constituées d'un cristal scintillateur, d'un guide optique plaqué contre ledit cristal, d'un réseau de tubes photomultiplicateurs dont les faces d'entrée sont en regard du guide optique, la dimension transversale de ce guide étant supérieure à celle du cristal scintillateur, l'ensemble guide optique-cristal scintillateur étant placé dans un boîtier métallique non fermé du côté photomultiplicateurs et les faces d'entrée des photomultiplicateurs périphériques débordant en dehors de la surface des faces du cristal scintillateur et d'un diaphragme placé de côté cristal scintillateur limitant le champ utile de la caméra.

Une telle caméra à scintillations de type Anger est connue du brevet américain N° 3 011 057, et comporte un bloc optique composé d'un crystal scintillateur en forme de lame plaquée contre un guide de lumière (guide optique) en forme également de lame sur laquelle est disposé un réseau de photomultiplicateurs qui détectent les scintillations produites dans le cristal scintillateur à la suite d'un rayonnement $\gamma$ incident. Le champ utile d'une telle coméra est délimité par un diaphragme placé devant le cristal scintillateur. Des circuits électroniques appropriés effectuent une combinaison adéquate des signaux de sortie des photomultiplicateurs pour en déduire des signaux de coordonnées x et y, de sorte que la position des scintillations produites dans le cristal scintillateur soit définie. Du fait que, grâce à l'emploi d'un collimateur, le cristal scintillateur n'est frappé que par des quanta de rayonnement $\gamma$ frappant ledit cristal pratiquement sous un angle de 90° on obtient qu'également la source qui a donné lieu auxdites scintillations est localisée. Les signaux que l'on obtient de la sorte peuvent être affichés sous la forme d'une image sur un écran. Cette représentation spatiale des scintillations sur l'écran est affectée de défauts de non linéarité et d'uniformité. Il est possible de prouver la présence de ces défauts lorsque le cristal scintillateur reçoit un flux de rayons $\gamma$ présentant une distribution spatiale uniforme. Les points obtenus sur l'écran de la caméra possèdent alors une distribution spatiale non uniforme. On constate clairement une densité des points plus importante dans les régions correspondant aux positions des zones centrales des tubes photomultiplicateurs de la partie central du réseau de ces tubes. Cela s'explique comme suit: lorsqu'il se produit une scintillation en un point particulier du cristal scintillateur situé près de l'axe de l'un des tubes photomultiplicateurs de la partie central du réseau de ces tubes, le point correspondant reproduit sur l'écran est déplacé sur celui-ci vers une position plus rapprochée de l'axe du tube que la véritable position de la scintillation. Ce phénomène de déplacement (rapprochement) apparent de la scintillation vers l'axe du tube photomultiplicateur est plus visible dans la partie centrale de l'écran que sur sa périphérie.

Une des causes de non linéarité de la caméra se trouve résider également dans un "effet de bord" du bloc optique, les propriétés optiques de la périphérie de ce bloc déterminant pour une part la manière dont la lumière se répartit sur les photomultiplicateurs. Cet effet est plus sensible pour les photomultiplicateurs les plus périphériques.

Dans le brevet français N° 2 219 424, on préconise une correction de ces défauts, correction pour laquelle on utilise un circuit électronique qui corrige ensuite les signaux qui ont été détectés par les photomultiplicateurs de la partie centrale du réseau. Cela complique extrêmement le circuit d'amplification de signal, et le niveau des signaux des photomultiplicateurs centraux est diminué sélectivement. L'amélioration de la linéarité se fait également au prix d'une diminution de la résolution spatiale et énergétique de la caméra.

Dans le brevet français N° 2 168 250, on préconise une méthode de correction optique qui consiste dans l'utilisation d'éléments diffusant la lumière, éléments qui sont relativement opaques et disposés entre le cristal scintillateur et le guide optique sous chacun desdits tubes photomultiplicateurs de la seule région centrale de la caméra. D'une manière analogue, le brevet français N° 2 219 423 préconise l'utilisation d'éléments coniques qui sont semi-transparents à la lumière de scintillation et qui réfléchissent cette lumière différemment en fonction de l'angle d'incidence, lesdits éléments étant disposés dans le guide optique au droit des photomultiplicateurs de la région centrale du réseau. Ces moyens de correction optiques compliquent singulièrement la construction du bloc optique de la caméra, et ont l'inconvénient qu'une amélioration de la linéarité de la caméra se fait au prix d'une diminution des autres performances, par exemple la résolution spatiale et énergétique.

Dans le brevet américain N° 4 109 150 ou encore dans le brevet français N° 2 323 158, on utilise aussi une correction de type optique, mais celle-ci au lieu d'agir sur la région centrale de la caméra agit sur son bord. La périphérie du guide optique qui déborde du cristal scintillateur est munie du côté cristal scintillateur d'un réflecteur diffuseur qui réfléchit la lumière vers les photomultiplicateurs, ce qui a pour effet d'une part d'améliorer la linéarité de réponse de l'ensemble de la caméra et d'autre part l'uniformité de la réponse aux bords du champ de détection.

C'est aussi une correction optique de ce genre que propose l'invention. Mais, le but de l'invention est de concevoir le réflecteur diffuseur entourant le guide optique de manière à ce qu'il conduise à un bon compromis entre, d'une part, les linéarité et uniformité spatiales et, d'autre part, la résolution spatiale et énergétique. Une étude préliminaire à montré que ce but est atteint lorsque les propriétés de réflexion et diffusion optiques dudit réflecteur diffuseur, en ce qui concerne la longueur d'onde de la lumière de scintillation, concourent à faire en sorte que les courbes "signal-distance" relatives à tous les photomultiplicateurs soient confondues dans leurs parties correspondant à des scintillations ayant lieu dans le champ utile de la caméra. Selon l'invention, il est donné à ce réflecteur-diffuseur une structure qui par la forme de ses surfaces réfléchissantes et diffusantes et leurs propriétés optiques conduit à la satisfaction de cette condition.

L'invention propose ainsi une caméra à scintillations de type Anger constituée d'un cristal scintillateur, d'un guide optique plaqué contre ledit cristal, d'un réseau de tubes photomultiplicateurs dont les faces d'entrée sont en regard du guide optique, la dimension transversale de ce guide étant supérieure á celle du cristal scintillateur, l'ensemble guide optique-cristal scintillateur étant placé dans un boîtier métallique non fermé du côté photomultiplicateurs et les faces d'entrée des photomultiplicateurs périphériques débordant en dehors de la surface des faces du cristal scintillateur et d'un diaphragme placé du côté cristal scintillateur limitant le champ utile de la caméra, la périphérie du guide optique étant munie d'un réflecteur diffuseur de lumière, caractérisée en ce que le réflecteur diffuseur est formé par deux surfaces très rapprochées formées d'une part par au moins une partie de la surface interne du boîtier enfermant l'ensemble cristal scintillateur-guide optique, la couleur apparente de ladite surface étant un gris métallique, et d'autre part par au moins une partie de la surface dépolie du guide optique en regard de ladite surface interne de boîtier.

Selon des variantes de l'invention le guide optique, le cristal scintillateur et le réflecteur-diffuseur sont soit circulaires et concentriques, soit rectangulaires.

La description suivante, en regard du dessin annexé, le tout donné à titre d'exemple, fera bien comprendre comment l'invention peut être réalisée.

La figure 1 illustre un mode de réalisation préféré d'une caméra à scintillations conforme à l'invention, cette caméra étant vue de face, côté tubes photomultiplicateurs.

La figure 2 est une vue en coupe par le plan de section AB de la figure 1 d'une caméra à scintillations qui, du côté détection, est dotée du perfectionnement conforme à l'invention.

La figure 3a montre les caractéristiques "signal-distance" des photomultiplicateurs de détection dans une caméra selon l'art antérieur.

La figure 3b montre les mêmes caractéristiques signal-distance dans une caméra selon l'invention.

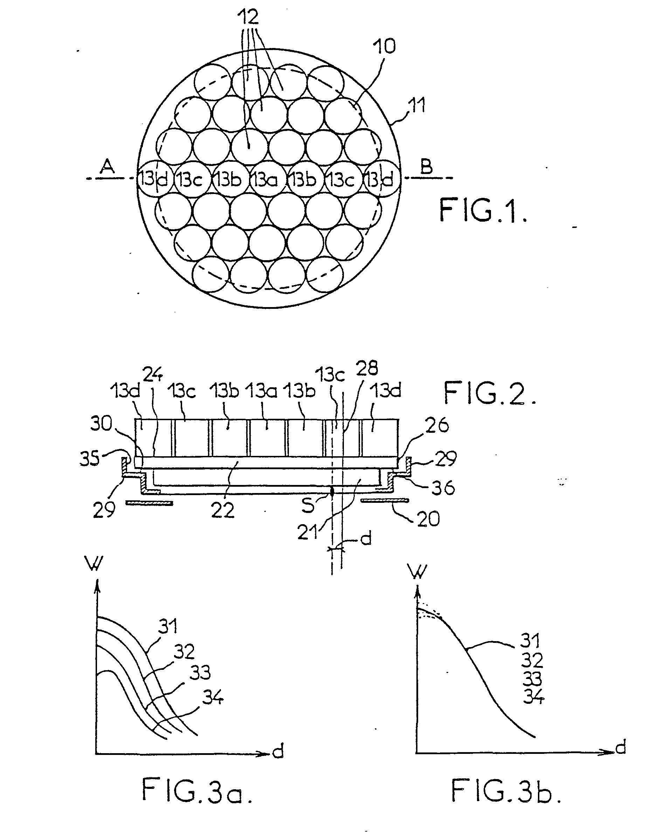

Sur la figure 1 qui, à titre d'exemple, montre une caméra à scintillations de forme circulaire, cette caméra pouvant toutefois être par exemple rectangulaire, le cercle en pointillé 10 représente le contour du cristal scintillateur tandis que le cercle 11, en trait plein, représente le contour d'un guide de lumière. Les fenêtre d'entrée 12 des tubes photomultiplicateurs forment ensemble un réseau, et se situent en face d'un cristal scintillateur 21 sur le guide de lumière 22 représenté sur la figure 2. Les tubes photomultiplicateurs sont disposés par exemple selon une configuration hexagonale autour d'un tube photomultiplicateur central. Le tube photomultiplicateur désigné par 13a est le tube central. Les références 13b, 13c et 13d désignent les tubes photomultiplicateurs alignés suivant un plan de coupe central AB. Pour la clarté de la figure, deux tubes photomultiplicateurs symétriques par rapport au tube photomultiplicateur 13a et disposés suivant le plan de coupe AB, portent la même référence.

Sur la figure 2 représentant une coupe transversale de l'entrée de la caméra suivant le plan de coupe AB de la figure 1, le cristal scintillateur porte la référence 21, le guide optique portant la référence 22. Sur le guide optique 22 se trouvent les tubes photomultiplicateurs 13a, 13b, 13c, 13d. Habituellement, le bord 10 du cristal scintillateur 12 coïncide sensiblement avec les centres 24 des tubes photomultiplicateurs 13d, tandis que le bord 11 du guide optique coïncide avec la limite extérieure de 13d. Le champ utile de la caméra est limité par le diaphragme 20, disposé en face du cristal scintillateur.

La figure 3a montre une série de courbes de réponse des tubes photomultiplicateurs disposés suivant le plan de coupe AB lorsque l'on déplace une source ponctuelle de rayons gamma le long dudit plan AB. En ordonnée est indiqué le signal W issu du tube photomultiplicateur, et en abscisse est indiquée la distance d entre la source de rayons gamma et l'axe du tube photomultiplicateur. Pour le tube photomultiplicateur 13c par exemple, il s'agit de la distance d entre l'axe 28 et la source S. En concordance avec l'art antérieur rappelé, les courbes 31, 32, 33 et 34 relatives aux tubes photomultiplicateurs respectifs 13a, 13b, 13c et 13d ne coïncident pas, et sont, par exemple dans l'ordre situées l'une au-dessous de l'autre.

Selon l'invention, un bon compromis entre d'une part les linéarité et uniformité spatiales et la résolution spatiale et énergétique de la caméra est obtenu lorsque lesdites courbes de réponse tendent à se confondre comme représenté sur la figure 3b. Les deux cas sont limitées à un champ utile tel que celui-ci est défini par le diaphragme 20.

Pour l'obtention de courbes de réponse qui coïncident au moins pratiquement, la périphérie 26 du guide optique est munie d'un réflecteur diffuseur de propriétés optiques d'absorption et diffusion adéquates au vu de la longueur d'onde de la lumière de scintillation et dont l'aspect visuel est variable en teintes et couleurs du fait du spectre étroit de la lumière de scintillation.

Selon l'invention, le réflecteur diffuseur est constitué comme représenté sur la figure 2. L'ensemble que forment le cristal scintillateur 21 et le guide optique 11 est placé de manière classique dans un boîtier non fermé du côté tubes photomultiplicateurs. Les surfaces 30 et 35 en regard du guide optique 22 ont une couleur grise et ne sont pas polies. La surface 26 du guide d'onde, située en face de la surface 35, et une surface 36 du guide d'onde, située en face de la surface 30, sont dépolies. Le réflecteur diffuseur, de couleur grise, utilisé selon l'invention, résulte de l'association des surfaces 30, 35 d'une part et 26, 35 d'autre part, très rapprochées l'une de l'autre, lesquelles conjuguent leurs propriétés de réflexion et diffusion optiques en liaison avec leur couleur et état de surface respectifs.

Il va de soi que l'invention qui n'a été décrite que par rapport à la forme circulaire du bloc optique la plus usitée, s'étend à toute caméra dont le bloc optique est à forme polygonale, par exemple rectangulaire ou carrée.

## Revendications

1. Caméra à scintillations de type Anger constituée d'un cristal scintillateur (10, 21), d'un guide optique (11, 22) plaqué contre ledit cristal, d'un réseau de tubes photomultiplicateurs (13a, b, c, d) dont les faces d'entrée sont en regard du guide optique, la dimension transversale de ce guide étant supérieure à celle du cristal scintillateur, l'ensemble guide optique-cristal scintillateur étant placé dans un boîtier métallique non fermé du côté photomultiplicateurs et les faces d'entrée des photomultiplicateurs périphériques débordant en dehors de la surface des faces du cristal scintillateur, et d'un diaphragme (20) placé du côté cristal scintillateur limitant le champ utile de la caméra, la pérophérie du guide optique étant munie d'un réflecteur diffuseur de lumière, caractérisée en ce que le réflecteur diffuseur est formé par deux surfaces très rapprochées, formées d'une part par au moins une partie de la surface interne (30, 35) du boîtier enfermant l'ensemble cristal scintillateur-guide optique, la couleur apparente de ladite surface étant un gris métallique, et d'autre part par au moins une partie de la surface dépolie (26, 36) de guide optique en regard de ladite surface interne de boîtier.

2. Caméra selon la revendication 1, caractérisée en ce que le guide optique, le cristal scintillateur et le réflecteur diffuseur sont circulaires et concentriques.

3. Caméra selon la revendication 1, caractérisée en ce que le guide optique, le cristal scintillateur et le réflecteur diffuseur sont rectangulaires.

## Patentansprüche

1, Szintillationskamera des Anger-Typs, bestehend aus einem Szintillatorkristall (10, 21), einem optischen Leiter (11, 22), der an diesem Kristall angebracht ist, einem Netz von Fotovervielfacherröhren (13a, b, c, d), deren Eingangsflächen gegenüber dem optischen Leiter liegen, wobei die Querabmessung dieses Leiters grösser als die des Szintillatorkristalls ist, die Optikleiter-Szintillatorkristall-Einheit in einem, an der Seite der Forovervielfacher nicht geschlossenen Metallgehäuse angeordnet ist, und die Eintrittsflächen der äusseren Fotomultiplikatoren aus der seitlichen Oberfläche des Szintillatorkristalls ragen, und einer Blende (20), die seitlich des Szintillatorkristalls angeordnet ist und den Nutzbereich der Kamera begrenzt, wobei der Umfang des optischen Leiters mit einem Lichtverteilerreflektor ausgerüstet ist, dadurch kennzeichnet, dass der Verteilerreflektor durch zwei nahe beieinander liegende Oberfläche gebildet ist, die einerseizt zumindest von einem Teil der inneren Oberfläche (30, 35) des Gehäuses, das die Szintillatorkristall-Optikleiter-Einheit einschliesst, wobei die scheinbare Farbe der genannten Oberfläche metallgrau ist, und andererseits zuminst von einem Teil der mattierten Oberfläche (26, 36) des optischen Leiters gegenüber der genannten inneren Oberfläche des Gehäuses gebildet wird.

2. Kamera nach Anspruch 1, dadurch gekennzeichnet, dass der optische Leiter, der Szintillatorkristall und der Verteilerreflektor kreisförmig und konzentrisch sind.

3. Kamera nach Anspruch 1, dadurch gekennzeichnet, dass der optische Leiter, der Szintillatorkristall und der Verteilerreflektor rechteckig sind.

## Claims

1. A scintillation camera of the Anger type which is formed by a scintillation crystal (10, 21), an optical guide (11, 22) which is arranged against said crystal, a network of photomultiplier tubes (13a, b, c, d) whose entrance faces face the optical guide, the transverse dimension of said guide being larger than that of the scintillation crystal, the assembly formed by the optical guide and the scintillation crystal being accommodated in a metal housing which is open at the side next to the photomultipliers, the entrance faces of the peripheral photomultipliers extending beyond the surface of the face of the scintillation crystal, and by a diaphragm (20) which is arranged next to the scintillation crystal and which limits the useful field of the camera, the periphery of the optical guide being provided with a diffusive light reflector, characterized in that the diffusive reflector is formed by two surfaces which are situated very near to each other and which are formed on the one hand by at least a part of the internal surface (30, 35) of the housing accommodating the assembly formed by the scintillation crystal and the optical guide, the apparent colour of said surface being metallic grey, and on the. other hand by at least a part of the roughened surface (26, 36) of the optical guide which faces said internal surface of the housing.

2. A camera as claimed in Claim 1, characterized in that the optical guide, the scintillation crystal and the diffusive reflector are circular and concentric.

3. A camera as claimed in Claim 1, characterized in that the optical guide, the scintillation crystal and the diffusive reflector are rectangular.

FIG.1.

FIG.2.

FIG.3a.

FIG.3b.